Europäisches Patentamt

European Patent Office

Office européen des brevets

(19)

(11) Veröffentlichungsnummer : **0 407 717 B1**

## (12) EUROPÄISCHE PATENTSCHRIFT

(45) Veröffentlichungstag der Patentschrift :
**12.05.93 Patentblatt 93/19**

(51) Int. Cl.$^5$ : **C01B 25/027**

(21) Anmeldenummer : **90109943.2**

(22) Anmeldetag : **25.05.90**

(54) **Verfahren zur elektrothermischen Herstellung von gelbem Phosphor.**

(30) Priorität : **10.07.89 DE 3922584**

(43) Veröffentlichungstag der Anmeldung :
**16.01.91 Patentblatt 91/03**

(45) Bekanntmachung des Hinweises auf die
Patenterteilung :
**12.05.93 Patentblatt 93/19**

(84) Benannte Vertragsstaaten :
**DE FR GB IT NL**

(56) Entgegenhaltungen :
**DE-A- 1 185 157**
**US-A- 2 117 301**
**US-A- 2 967 091**
**US-A- 4 158 699**
**World Patents Index Latest, Derwent Publica-**
**tions Ltd., London, GB; AN 86-231257 &**
**SU-A-1206319 (Electrothermal Equi.) 23.01.86**

(72) Erfinder : **Stendel, Joachim, Dr.**
**Schlaunstrasse 8**
**W-5040 Brühl (DE)**
Erfinder : **Niermann, Hermann, Dr.**
**Am Wachberg 34**
**W-5042 Erftstadt (DE)**
Erfinder : **Mandelkow, Dieter**
**Scheffelstrasse 18**
**W-5000 Köln (DE)**
Erfinder : **Baumann, Georg**
**Neustrasse 37**
**W-5042 Erftstadt (DE)**
Erfinder : **Horn, Karl**
**Gutenbergstrasse 6**
**W-5030 Hürth (DE)**

(73) Patentinhaber : **HOECHST**
**AKTIENGESELLSCHAFT**
**Brüningstrasse 64**
**W-6230 Frankfurt/Main 80 (DE)**
(84) **DE NL**
Patentinhaber : **Niermann, Hermann, Dr.**
**Am Wachberg 34**
**W-5042 Erftstadt (DE)**
(84) **FR GB IT**

**Beschreibung**

Die vorliegende Erfindung betrifft ein Verfahren zur Herstellung von gelbem Phosphor aus einer aus Rohphosphat, Koks und Kies in einem bestimmten vorgegebenen Mengenverhältnis bestehenden Reaktionsmischung in einem mit einem Deckel gasdicht verschlossenen, in seinem unteren Bereich mit Abstichöffnungen für Schlacke und Ferrophosphor versehenen Ofengefäß eines elektrothermischen Reduktionsofens, wobei durch den Deckel drei zylindrische Hohlelektroden und mehrere, mit Abstand um jede Hohlelektrode angeordnete Beschickungsrohre zum Eintragen der Reaktionsmischung hindurchgeführt sind.

Es ist bekannt, gelben Phosphor aus Rohphosphat, Kies und Koks in einem elektrothermischen Reduktionsofen herzustellen. Dabei besteht der Phosphorofen aus einem Ofengefäß, welches in seinem unteren Bereich mit Abstichöffnungen für Schlacke und Ferrophosphor versehen ist. Das Ofengefäß ist mit einem Deckel gasdicht verschlossen, wobei durch den Deckel drei zylindrische Elektroden hindurchgeführt sind, welche an den Ecken eines gleichseitigen Dreiecks angeordnet sind. Mit Abstand um jede Elektrode ist der Deckel von mehreren Beschickungsrohren durchdrungen, durch welche die Reaktionsmischung in den Phosphorofen eingetragen wird (vergl. "Ullmanns Encyklopädie der technischen Chemie", 4. Auflage, 1979, Band 18, Seiten 290 bis 292).

Beim Verfahren zur Herstellung von gelbem Phosphor nach der US-A-4 056 601 wird die Decke des Ofengefäßes von drei zylindrischen Hohlelektroden durchdrungen, wobei durch die Hohlelektroden feinverteilter Koks in Mischung mit einem Inertgas in den Phosphorofen eingebracht wird.

Die Leistung eines elektrothermischen Reduktionsofens zur Herstellung von gelbem Phosphor wird durch die Temperatur begrenzt, welche das den Ofen verlassende, im wesentlichen aus Phosphordampf und Kohlenmonoxid bestehende Gasgemisch aufweist, da dieses Gasgemisch, bevor aus ihm der gelbe Phosphor auskondensiert werden kann, in Elektroabscheidern vom enthaltenen Staub befreit werden muß und Elektroabscheider oberhalb von 600°C nicht mehr wirksam betreibbar sind. Durch diese Temperatur wird einerseits die Kapazität des Phosphorofens, d.h. die Fähigkeit, elektrische Leistung aufzunehmen sowie diese in Produktleistung umzusetzen und andererseits die Möglichkeit zur Verbesserung der Phosphatausbeute begrenzt. So ergibt sich die Situation, daß der Versuch, die Leistung des Phosphorofens zu steigern ebenso an dieser Temperaturgrenze scheitert wie der Versuch, die Ausbeute durch Veränderung der aus Rohphosphat, Koks und Kies bestehenden Reaktionsmischung, beispielsweise durch Änderung des Kornaufbaus oder der Koksrate, zu erhöhen.

Unabhängig von der installierten elektrischen Leistung des Phosphorofens ergibt sich für seine Kapazität eine Abhängigkeit von der Größe des Ofens und seiner geometrischen Maße sowie der Anordnung der Abstichöffnungen für Schlacke und Ferrophosphor und der Elektroden und deren Durchmesser, die durch den leistungsgbegrenzenden Temperatureffekt gegeben ist. Darüber hinaus besteht ein begrenzender Zusammenhang zwischen der Kapazität des Phosphorofens und Maßnahmen zur Verbesserung der Phosphatausbeute, die ebenfalls temperatursteigernd wirken, beispielsweise das Anheben des Koksanteils in der Reaktionsmischung. In einem gewissen Rahmen kann man die Kapazität des Phosphorofens zu Lasten der Phosphatausbeute steigern und umgekehrt.

Betreibt man einen Phosphorofen mit seiner maximalen Kapazität, so muß man aus wirtschaftlichen Gründen unvertretbare Phosphatausbeuten von weniger als 90 % hinnehmen. Dies gilt grundsätzlich auch für mit Hohlelektroden ausgestattete Phosphoröfen, jedoch kann durch den teilweisen Eintrag von Reaktionsmischung durch die Hohlelektroden die Grenze zu höherer Kapazität des Phosphorofens und zu besserer Phosphatausbeute hin verschoben werden.

Der Effekt, der bei einem mit Hohlelektroden versehenen Phosphorofen erreichbar ist, hängt unmittelbar mit dem Anteil an Reaktionsmischung zusammen, der durch die Hohlelektroden in den Phosphorofen eingebracht wird. Während beim mit Hohlelektroden versehenen elektrothermischen Reduktionsofen zur Herstellung von Calciumcarbid ca. 20 % der Reaktionsmischung durch die Hohlelektroden in den Ofen eingebracht werden können, gelang es bisher nicht, in einen mit Hohlelektroden versehenen Phosphorofen betriebsmäßig mehr als 5 % der Reaktionsmischung durch die Hohlelektroden einzuführen. Der Versuch, diesen Anteil dauerhaft zu erhöhen, führte zu einem Rückstau von Reaktionsmischung in den Hohlelektrodenrohren und damit zu ihrer Verstopfung.

Es ist daher Aufgabe der vorliegenden Erfindung, ein Verfahren zur Herstellung von gelbem Phosphor aus einer aus Rohphosphat, Koks und Kies bestehenden Reaktionsmischung in einem elektrothermischen Reduktionsofen anzugeben, bei welchem mehr als 5 % der gesamten Reaktionsmischung durch die Hohlelektroden in den Phosphorofen eingeführt werden können. Das wird erfindungsgemäß dadurch erreicht, daß durch mindestens eine Hohlelektrode eine kiesärmere oder kiesfreie Reaktionsmischung in das Ofengefäß eingetragen wird, während die Beschickungsrohre mit einer zur Einhaltung des bestimmten vorgegebenen Mengenverhältnisses von Rohphosphat, Koks und Kies entsprechend kiesreicheren Reaktionsmischung beaufschlagt werden.

Das Verfahren gemäß der Erfindung kann weiterhin wahlweise auch noch dadurch ausgestaltet sein, daß

a) zusätzlich über mindestens ein Beschickungsrohr eine kiesärmere oder kiesfreie Reaktionsmischung in das Ofengefäß eingetragen wird;

b) die mindestens einer Hohlelektrode zuzuordnenden Beschickungsrohre mit der kiesärmeren oder kiesfreien Reaktionsmischung beaufschlagt werden;

c) die zwei Hohlelektroden zuzuordnenden Beschickungsrohre mit der kiesärmeren oder kiesfreien Reaktionsmischung beaufschlagt werden;

d) das Beschickungsrohr mindestens einer Hohlelektrode, welches mit dem zentralen Beschickungsrohr, das sich im Mittelpunkt des durch die drei Hohlelektroden begrenzten Dreiecks befindet, auf einer auch durch die jeweils zuzuordnende Hohlelektrode verlaufenden Geraden liegt, mit der kiesärmeren oder kiesfreien Reaktionsmischung beaufschlagt wird;

e) in der kiesärmeren oder kiesfreien Reaktionsmischung der Koksanteil über das bestimmte vorgegebene Mengenverhältnis von Rohphosphat, Koks und Kies erhöht ist;

f) der Koksanteil bis zu 50 % über dem bestimmten vorgegebenen Mengenverhältnis liegt.

Im Rahmen der Erfindung ist unter einer kiesärmeren Reaktionsmischung eine solche Mischung zu verstehen, die weniger Kies ($SiO_2$) als entsprechend der angenäherten Reaktionsgleichung

$$2\ Ca_5(PO_4)_3F\ +\ 9\ SiO_2\ +\ 15\ C \rightarrow 9\ CaSiO_3\ +\ CaF_2\ +\ 15\ CO\ +\ 1{,}5\ P_4$$

enthält.

Beim erfindungsgemäßen Verfahren bringt eine Verringerung des Kiesanteiles in der Reaktionsmischung, welche durch die Hohlelektroden in den Phosphorofen eingebracht wird, eine erhebliche Erhöhung der Menge an Reaktionsmischung mit sich, welche durch die Hohlelektroden in den Phosphorofen eingeführt werden kann. So bringt eine Halbierung des stöchiometrischen Kiesanteiles eine Steigerung des durch die Hohlelektroden einführbaren Anteiles an Reaktionsmischung auf 8 % mit sich, während bei Verwendung einer kiesfreien, d.h. nur aus Rohphosphat und Koks bestehenden Reaktionsmischung der durch Hohlelektroden einbringbare Anteil an der Reaktionsmischung auf etwa 15 % gesteigert werden kann.

Beim Verfahren gemäß der Erfindung wird jede Hohlelektrode einzeln mit Reaktionsmischung beschickt, wobei die Zufuhr der Reaktionsmischung so geregelt wird, daß mit dem dosierten Materialstrom ein Spülgas in den Phosphorofen eingebracht wird, wobei das Spülgas mit einem Vordruck eingespeist werden kann, welcher etwa dem zweifachen Ofeninnendruck entspricht. Ist die Hohlelektrode zur Beschickung mit Reaktionsmischung frei, so baut sich im System annähernd der im Phosphorofen an der Elektrodenspitze herrschende Druck auf. Wird mehr Reaktionsmischung dosiert, als unterhalb der Elektrodenspitze abreagiert, so ergibt sich ein spontaner Druckanstieg in der Hohlelektrode, welcher die Abschaltung der Dosierung von Reaktionsmischung auslöst, um ein Verstopfen der Hohlelektrode zu vermeiden.

Das erfindungsgemäße Verfahren ermöglicht eine Erhöhung der Leistungsaufnahme des Phosphorofens und damit eine Steigerung seiner Kapazität, eine Verbesserung der Phosphor-Ausbeute, bezogen auf das eingesetzte Rohphosphat, sowie eine Herabsetzung des Verbrauches an Elektrodenmasse pro t produzierten Phosphors.

Beim Verfahren gemäß der Erfindung kann der Koksanteil über die Stöchiometrie hinaus erhöht werden, ohne daß sein positiver Einfluß auf die Leistungsaufnahme des Phosphorofens durch Erhöhung der Ofentemperatur und damit der Temperatur des den Phosphorofen verlassenden, aus Phosphordampf und Kohlenmonoxid bestehenden Gasgemisches beeinträchtigt wird.

Beim erfindungsgemäßen Verfahren können neben der Reduzierung des Kiesanteils in der Reaktionsmischung, welche durch die Hohlelektroden in den Phosphorofen eingeführt wird, auch Beschickungsrohre mit einer kiesärmeren Reaktionsmischung beaufschlagt werden, wobei man im allgemeinen dafür nur ein Beschickungsrohr je Hohlelektrode verwendet, insbesondere das Beschickungsrohr, welches dem zentralen Beschickungsrohr gegenüberliegend angeordnet ist.

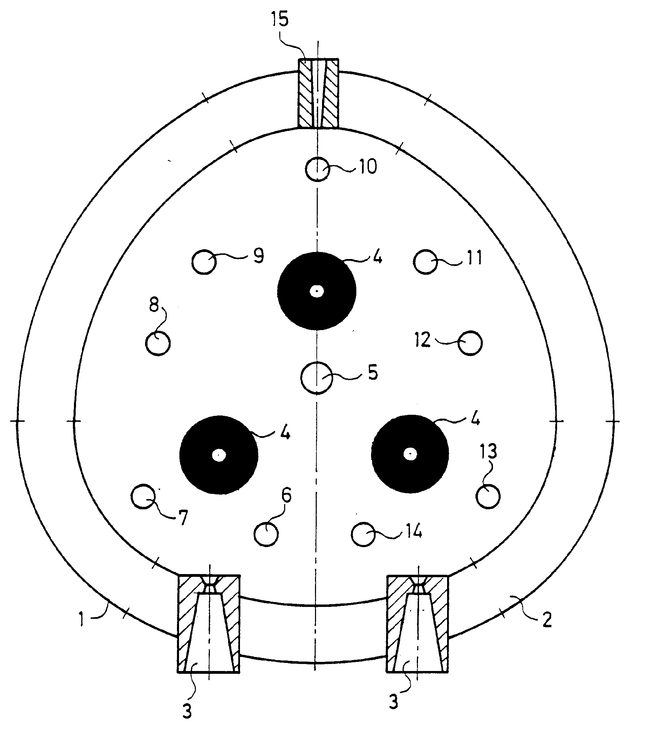

In der beigefügten Zeichnung, in welcher eine Draufsicht auf einen Phosphorofen schematisch dargestellt ist, ist ein Ofengefäß 1 an seiner Innenseite mit Mauerwerk 2 ausgekleidet. Ofengefäß 1 und Mauerwerk 2 sind von zwei nebeneinander angeordneten Abstichöffnungen 3 für Schlacke sowie von einer auf der entgegengesetzten Seite befindlichen Abstichöffnung 15 für Ferrophosphor durchdrungen. In das Ofengefäß 1 ragen drei zylindrische Hohlelektroden 4 hinein, welche an den Ecken eines gleichseitigen Dreiecks angeordnet sind. In der Mitte zwischen den Hohlelektroden 4 ragt das zentrale Beschickungsrohr 5 in das Ofengefäß 1 hinein. Um jede Hohlelektrode 4 befinden sich Beschickungsrohre (6 bis 14), wobei die Beschickungsrohre (7, 10, 13) dem zentralen Beschickungsrohr 5 gegenüberliegend angeordnet sind.

Beispiel 1 (Vergleichsbeispiel)

In einen Phosphorofen mit einer installierten Leistung von 60 MW wurde über die Beschickungsrohre 5 bis 14 (vergleiche die Figur) eine Reaktionsmischung aufgegeben, welche aus 1,4 t (12,3 %) Koks, 2,5 t (21,9 %) Kies und 7,5 t (65,8 %) Rohphosphat bestand.

Bei einer Ofenleistung von 48 MW betrug die Temperatur des den Phosphorofen verlassenden Gasgemisches 595°C; pro t produzierten Phosphors wurden 60 kg Elektrodenmasse verbraucht und die Phosphor-Ausbeute, bezogen auf das eingesetzte Rohphosphat, belief sich auf 90 %.

Beispiel 2 (Vergleichsbeispiel)

Beispiel 1 wurde mit der Änderung wiederholt, daß 5 % der Reaktionsmischung über die drei Hohlelektroden in den Phosphorofen eingebracht wurden. Bei einer Ofenleistung von 50 MW betrug die Temperatur des den Phosphorofen verlassenden Gasgemisches 590°C; pro t produzierten Phosphors wurden 50 kg Elektrodenmasse verbraucht und die Phosphor-Ausbeute, bezogen auf das eingesetzte Rohphosphat, belief sich auf 92 %.

Beispiel 3 (gemäß der Erfindung)

In einen Phosphorofen mit einer installierten Leistung von 60 MW wurde über die Beschickungsrohre 5 bis 14 (vergleiche die Figur) eine Reaktionsmischung aufgegeben, welche aus 1,4 t (12,1 %) Koks, 2,6 t (22,7 %) Kies und 7,5 t (65,2 %) Rohphosphat bestand, während eine aus 1,4 t (13,8 %) Koks, 1,25 t (12,3 %) Kies und 7,5 t (73,9 %) Rohphosphat bestehende Reaktionsmischung über die Hohlelektroden 4 in den Phosphorofen eingeführt wurde, wobei das Gewichtsverhältnis beider Reaktionsmischungen 92 : 8 betrug.
Bei einer Ofenleistung von 52 MW betrug die Temperatur des den Phosphorofen verlassenden Gasgemisches 595°C; pro t produzierten Phosphor wurden 45 kg Elektrodenmasse verbraucht und die Phosphor-Ausbeute, bezogen auf das eingesetzte Rohphosphat, belief sich auf 93 %.

Beispiel 4 (gemäß der Erfindung)

In einen Phosphorofen mit einer installierten Leistung von 60 MW wurde über die Beschickungsrohre 5 bis 14 (vergleiche die Figur) eine Reaktionsmischung aufgegeben, welche aus 1,4 t (11,8 %) Koks, 2,9 t (24,8 %) Kies und 7,5 t (63,4 %) Rohphosphat bestand, während eine aus 1,4 t (15,7 %) Koks und 7,5 t (84,3 %) Rohphosphat bestehende kiesfreie Reaktionsmischung über die Hohlelektroden 4 in den Phosphorofen eingeführt wurde, wobei das Gewichtsverhältnis beider Reaktionsmischungen 85 : 15 betrug.
Bei einer Ofenleistung von 55 MW betrug die Temperatur des den Phosphorofen verlassenden Gasgemisches 600°C; pro t produzierten Phosphors wurden 42 kg Elektrodenmasse verbraucht und die Phosphor-Ausbeute, bezogen auf das eingesetzte Rohphosphat, belief sich auf 94 %.

Beispiel 5 (gemäß der Erfindung)

In einen Phosphorofen mit einer installierten Leistung von 60 MW wurde über die Beschickungsrohre 5 bis 14 (vergleiche die Figur) eine Reaktionsmischung aufgegeben, welche aus 1,25 t (10,6 %) Koks, 3,05 t (25,8 %) Kies und 7,5 t (63,6 %) Rohphosphat bestand, während eine aus 2,1 t (21,3 %) Koks und 7,5 t (78,7 %) Rohphosphat bestehende kiesfreie Reaktionsmischung mit um 50 % erhöhter Koksrate über die Hohlelektroden 4 in den Phosphorofen eingeführt wurde, wobei das Gewichtsverhältnis beider Reaktionsmischungen 82 : 18 betrug.
Bei einer Ofenleistung von 58 MW betrug die Temperatur des den Phosphorofen verlassenden Gasgemisches 595°C; pro t produzierten Phosphors wurden 40 kg Elektrodenmasse verbraucht und die Phosphor-Ausbeute, bezogen auf das eingesetzte Rohphosphat, belief sich auf 95 %.

Beispiel 6 (gemäß der Erfindung)

In einen Phosphorofen mit einer installierten Leistung von 60 MW wurde über die Beschickungsrohre 5, 6, 8, 9, 11, 12 und 14 (vergleiche die Figur) eine Reaktionsmischung aufgegeben, welche aus 1,2 t (9,4 %) Koks, 4,1 t (31,9 %) Kies und 7,5 t (58,7 %) Rohphosphat bestand und über die Beschickungsrohre 7, 10 und 13, über die ein Mengenanteil von 27 % in den Phosphorofen eingeführt wurde, eine aus 1,4 t (13,8 %) Koks, 1,25 t (12,3 %) Kies und 7,5 t (73,9 %) Rohphosphat zusammengesetzte Reaktionsmischung, während eine aus 2,1 t (21,3 %) Koks und 7,5 t (78,7 %) Rohphosphat bestehende kiesfreie Reaktionsmischung mit um 50 % erhöhter Koksrate über die Hohlelektroden 4 in den Phosphorofen eingeführt wurde, wobei 20 % der gesamten Reaktionsmischungen über die Hohlelektroden 4 in den Phosphorofen eingebracht wurden.
Bei einer Ofenleistung von 60 MW betrug die Temperatur des den Phosphorofen verlassenden Gasgemisches 600°C; pro t produzierten Phosphors wurden 35 kg Elektrodenmasse verbraucht und die Phosphor-Ausbeute, bezogen auf das eingesetzte Rohphosphat, belief sich auf 97 %.

**Patentansprüche**

1. Verfahren zur Herstellung von gelbem Phosphor aus einer aus Rohphosphat, Koks und Kies in einem bestimmten vorgegebenen Mengenverhältnis bestehenden Reaktionsmischung in einem mit einem Deckel gasdicht verschlossenen, in seinem unteren Bereich mit Abstichöffnungen für Schlacke und Ferrophosphor versehenen Ofengefäß eines elektrothermischen Reduktionsofens, wobei durch den Deckel drei zylindrische Hohlelektroden und mehrere, mit Abstand um jede Hohlelektrode angeordnete Beschickungsrohre zum Eintragen der Reaktionsmischung hindurchgeführt sind, dadurch gekennzeichnet, daß durch mindestens eine Hohlelektrode eine kiesärmere oder kiesfreie Reaktionsmischung in das Ofengefäß eingetragen wird, während die Beschickungsrohre mit einer zur Einhaltung des bestimmten vorgegebenen Mengenverhältnisses von Rohphosphat, Koks und Kies entsprechend kiesreicheren Reaktionsmischung beaufschlagt werden.

2. Verfahren nach Anspruch 1, dadurch gekennzeichnet, daß zusätzlich durch mindestens ein Beschickungsrohr eine kiesärmere oder kiesfreie Reaktionsmischung in das Ofengefäß eingetragen wird.

3. Verfahren nach Anspruch 2, dadurch gekennzeichnet, daß die mindestens einer Hohlelektrode zuzuordnenden Beschickungsrohre mit der kiesärmeren oder kiesfreien Reaktionsmischung beaufschlagt werden.

4. Verfahren nach Anspruch 2, dadurch gekennzeichnet, daß die zwei Hohlelektroden zuzuordnenden Beschickungsrohre mit der kiesärmeren oder kiesfreien Reaktionsmischung beaufschlagt werden.

5. Verfahren nach mindestens einem der Ansprüche 1 bis 4, dadurch gekennzeichnet, daß das Beschickungsrohr mindestens einer Hohlelektrode, welches mit dem zentralen Beschickungsrohr, das sich im Mittelpunkt des durch die drei Hohlelektroden begrenzten Dreiecks befindet, auf einer auch durch die jeweils zuzuordnende Hohlelektrode verlaufenden Geraden liegt, mit der kiesärmeren oder kiesfreien Reaktionsmischung beaufschlagt wird.

6. Verfahren nach mindestens einem der Ansprüche 1 bis 5, dadurch gekennzeichnet, daß in der kiesärmeren oder kiesfreien Reaktionsmischung der Koksanteil über das bestimmte vorgegebene Mengenverhältnis von Rohphosphat, Koks und Kies erhöht ist.

7. Verfahren nach Anspruch 6, dadurch gekennzeichnet, daß der Koksanteil bis zu 50 % über dem bestimmten vorgegebenen Mengenverhältnis liegt.

## Claims

1. A process for the production of yellow phosphorus from a reaction mixture, consisting of crude phosphate, coke and coarse sand in a defined preset quantitative ratio, in a furnace vessel, sealed gastight by a cover and provided in its lower zone with tapholes for slag and ferrophosphorus, of an electrothermal reduction furnace, with three cylindrical hollow electrodes and a plurality of charging pipes, arranged at a spacing around each hollow electrode into the furnace, for introducing the reaction mixture being taken through the cover, which comprises introducing a reaction mixture, which is lower in coarse sand or free of coarse sand, through at least one hollow electrode into the furnace vessel, while the charging pipes are supplied with a reaction mixture which is correspondingly richer in coarse sand in order to adhere to the defined preset quantitative ratio of crude phosphate, coke and coarse sand.

2. The process as claimed in claim 1, wherein a reaction mixture lower in coarse sand or free of coarse sand is additionally introduced into the furnace vessel through at least one charging pipe.

3. The process as claimed in claim 2, wherein the charging pipes to be associated with at least one hollow electrode are supplied with the reaction mixture lower in coarse sand or free of coarse sand.

4. The process as claimed in claim 2, wherein the charging pipes to be associated with two hollow electrodes are supplied with the reaction mixture lower in coarse sand or free of coarse sand.

5. The process as claimed in at least one of claims 1 to 4, wherein the charging pipe of at least one hollow electrode, which charging pipe is located together with the central charging pipe in the center of the triangle bounded by the three hollow electrodes on a straight line which also passes through the particular associated hollow electrode, is supplied with the reaction mixture lower in coarse sand or free of coarse sand.

6. The process as claimed in at least one of claims 1 to 5, wherein the coke content in the reaction mixture lower in coarse sand or free of coarse sand is increased over the defined preset quantitative ratio of crude phosphate, coke and coarse sand.

7. The process as claimed in claim 6, wherein the coke content is up to 50 % more than the defined preset quantitative ratio.

**Revendications**

1. Procédé de préparation de phosphore blanc à partir d'un mélange réactionnel composé de phosphore brut, de coke et de silice dans des proportions quantitatives prédéfinies, dans la carcasse d'un four à réduction rendue étanche aux gaz par un couvercle, munie dans sa partie inférieure d'ouvertures de percée pour les scories et le ferro-phosphore, le couvercle étant traversé par trois électrodes creuses cylindriques et par plusieurs conduites d'alimentation placées à une certaine distance autour de chaque électrode, destinées à l'introduction du mélange réactionnel, caractérisé en ce qu'un mélange réactionnel pauvre en silice ou sans silice est amené à l'intérieur du four par l'intermédiaire d'au moins une électrode creuse, pendant que le four est alimenté par l'intermédiaire des conduites d'alimentation avec un mélange riche en silice correspondant aux proportions quantitatives du phosphate brut, du coke et de la silice prédéfinies pour l'alimentation.

2. Procédé selon la revendication 1, caractérisé en ce qu'on alimente en plus l'intérieur du four avec un mélange réactionnel pauvre en silice ou sans silice par l'intermédiaire d'au moins une conduite d'alimentation.

3. Procédé selon la revendication 2, caractérisé en ce que les conduites d'alimentation associées à au moins une électrode creuse sont alimentées avec un mélange réactionnel pauvre en silice ou sans silice.

4. Procédé selon la revendication 2, caractérisé en ce que les conduites d'alimentation associées à deux électrodes creuses sont alimentées avec un mélange pauvre en silice ou sans silice.

5. Procédé selon au moins une des revendications 1 à 4, caractérisé en ce que la conduite d'alimentation d'au moins une électrode creuse qui se trouve sur une ligne droite passant également par l'électrode creuse correspondante et la conduite d'alimentation centrale qui se trouve au milieu du triangle formé par les trois électrodes creuses, est alimentée avec un mélange réactionnel pauvre en silice ou sans silice.

6. Procédé selon au moins une des revendications 1 à 5, caractérisé en ce que dans le mélange réactionnel pauvre en gravier ou sans gravier la teneur en coke est supérieure aux proportions quantitatives prédéfinies du phosphate brut, du coke et de la silice.

7. Procédé selon la revendication 6, caractérisé en ce que la teneur en coke est jusqu'à 50 % plus élevée que la proportion quantitative prédéfinie.